# EUROPÄISCHE PATENTANMELDUNG

(11) **EP 1 149 882 A1**
(43) Veröffentlichungstag der Anmeldung: **31.10.2001**
(21) Anmeldenummer: 00108916.8
(22) Anmeldetag: 27.04.2000
(51) Int. Cl.: C09J 7/04, D04H 11/08

(54) **Textiler Träger für Klebbänder**

(71) Anmelder: Böttcher, Peter, Dr.-Ing., 09127 Chemnitz (DE); Hessmer, Michael, 58638 Iserlohn (DE)
(72) Erfinder: Böttcher, Peter, Dr.-Ing., 09127 Chemnitz (DE); Hessmer, Michael, 58698 Iserlohn (DE)

(57) **Zusammenfassung**

Die Erfindung betrifft einen textilen Träger für Klebbänder, bestehend aus einem Vliesstoff mit einer Faserschicht auf einer Oberflächenseite, der auf der anderen Oberflächenseite mit Klebmittel beschichtet und zu schmalen Bändern geschnitten wird. An der nicht für die Klebstoffbeschichtung vorgesehene Oberflächenseite des Vliesstoffes sind senkrecht zum Vliesstoffquerschnitt abstehende Faserteile angeordnet, die über die gesamte Fläche eine hohe Dichte, Parallelität und gleichmäßige Höhe aufweisen, wobei ein oder beide Enden der Faserteile im Vliesstoffquerschnitt mechanisch eingebunden sind. Die auf einer Seite vorhandene velourisierte Oberfläche ist beispielsweise für die Funktion des Abbaues von Druckkräften oder der Schallminderung hervorragend geeignet.

## Beschreibung

Die Erfindung betrifft einen textilen Träger, bestehend aus einem Vliesstoff mit einer Faserschicht auf einer Oberflächenseite, der auf der anderen Oberflächenseite mit Klebmittel beschichtet und zu schmalen Bändern geschnitten wird. Derartige Klebbänder werden beispielsweise zur Kabelummantelung in Fahrzeugen zur Schallminderung, der Aufnahme von Stoßbeanspruchungen, dem Schutz vor Reibbeanspruchungen oder anderen Schadensmöglichkeiten für das innen liegende Kabel eingesetzt.

Bekannt sind bereits textile Träger für Klebbänder aus Gewebe. Auch der Einsatz von Maschenstoffen mit einer Filamentpoloberfläche ist bekannt. Speziell das letzte Erzeugnis weist eine hohe Funktionalität im Sinne des Kabelschutzes vor mechanischen Beschädigungen auf. Die aus Faser- oder Filamentgarnen bestehenden Träger sind jedoch relativ kostenintensiv. Aus Kostengründen sind auch schon textile Träger aus durch Fasern oder Fäden vermaschtem Vlies im Einsatz (EP 0 668 336 A1). Diese Maschenverfestigung mit Fäden ergibt auf einer Oberflächenseite eine Struktur aus eng beieinander liegenden Tälern und Erhebungen, die es möglich macht, das Klebband mit der selbstklebenden Beschichtung ohne besondere Trennschicht aufzurollen und zum Verbrauch ohne Beschädigung der Klebeschicht wieder leicht abrollen zu können. Derartige textile Träger weisen jedoch keine optimale Oberfläche zur effektiven Aufnahme von beispielsweise Druckbeanspruchungen, zur Schallminderung oder dgl. auf, da alle Fasern parallel zum Vliesstoffquerschnitt angeordnet sind.

Des weiteren sind aus der DE 44 42 093 Vliesträger vom Typ Malivlies und aus der DE 44 42 507 Vliesträger vom Typ Kunit bzw. Multiknit bekannt. Bei diesen Vliesträgern sind die Fasern vorwiegend quer bzw. diagonal zum Vliesstoffquerschnitt ausgerichtet. Die Faserpoloberfläche weist eine große Dickenungleichmäßigkeit auf, so daß die geforderten Eigenschaften für die beabsichtigten Einsatzgebiete nicht ausreichend gewährleistet sind. Des weiteren tritt beim Biegen bzw. Einrollen eine Faltenbildung auf, die insbesondere bei Multiknit durch die an beiden Oberflächen befindlichen Fasermaschen hervorgerufen wird.

Der Erfindung liegt deshalb die Aufgabe zugrunde, einen textilen Träger für Klebbänder aus Vliesstoffen zu schaffen, der einerseits kostengünstig herstellbar ist und der zum Zweiten eine Oberfläche aufweist, die fünktionell hervorragend Druckkräfte zum Schutz von Kabeln o. a. von Klebband ummantelten nichttextilen Materialien aufnehmen kann.

Erfindungsgemäß wird diese Aufgabe durch die im Anspruch 1 aufgezeigten Merkmale gelöst. Vorteilhafte Ausführungen sind in den Unteransprüchen enthalten.

Mit der erfindungsgemäßen Lösung wird erreicht, daß der textile Träger aus einer an sich bekannten Vliesstoffstruktur eine durch ein bekanntes Nadelverfahren erzielte velourisierte Oberfläche aufweist, die für die Funktion des Abbaues von Druckkräften oder der Schallminderung hervorragend geeignet ist. Grund ist ein hoher Anteil der im Vliesstoff enthaltenen Gesamtfaserlänge, der senkrecht zum Vliesstoffquerschnitt und somit parallel zur Beanspruchungsaufnahme im Gebrauch angeordnet ist.

### Ausführungsbeispiele

Die Erfindung wird nachstehend anhand von Ausführungsbeispielen näher beschrieben. Die dazugehörige Zeichnung zeigt den schematischen Querschnitt eines textilen Trägers für Klebbänder aus einem auf einer Oberflächenseite velourisierten Vliesstoff.

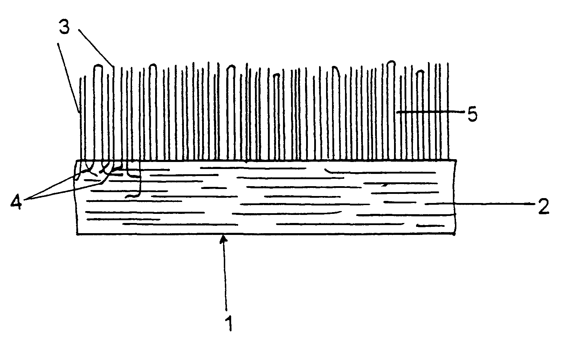

Die in der Zeichnung dargestellte erfindungsgemäße Oberflächenstruktur einer Seite des textilen Trägers mit vielen parallelen Faserteilen 3, die senkrecht zum Vliesstoffquerschnitt 2 angeordnet sind und eine hohe Gleichmäßigkeit ihrer Länge aufweisen, wird erreicht durch ein als Velourisieren zu bezeichnender Vernadelungsprozess. Dabei wird der Vliesstoff mit senkrecht einwirkenden Nadeln durchstochen. Diese Nadeln haben an der Spitze eine gabelzinkenförmige Aussparung (Gabelnadeln) oder kurz nach der Spitze auf dem Dreikantschaft in gleichem Abstand von der Spitze je einen Widerhaken (Kranz- oder Kronennadeln). In diese Öffnungen der durchstechenden Nadel gelangen bisher parallel zum Vliesstoffquerschnitt angeordnete Faserteile und werden beim Durchstechen aus dem Vliesstoffquerschnitt herausgestoßen oder -gezogen und als Faserteil oder -schlinge mit hoher Parallelität und großer Höhengleichmäßigkeit vertikal zum Vliesstoffquerschnitt 2 so angeordnet, daß jedes Faserteil 3 mit einem oder beiden Faserteilenden 4 im Vliesstoffquerschnitt 2 mechanisch eingebunden ist. Die Faserteile 3 bilden auf einer Oberflächenseite des Vliesstoffes eine markante Faserschicht 5. Dabei werden in solchen speziellen Strukturierungsnadelmaschinen diese aus dem Vliesstoffquerschnitt vertikal ausgetragenen Faserteile in ein mitlaufendes Bürstenband eingetragen, um die vertikale Anordnung zu behalten und nicht umgelegt und dann durch folgende Nadeldurchstiche in schräger Lage fixiert zu werden.

Üblicherweise arbeitet man bei der erfindungsgemäßen Oberflächenstrukturierung mit auf die Faserfeinheit des Vliesstoffes abgestimmten feinen Gabel- oder Kronennadeln mit Stichdichten je cm² Vliesstoff von 300 bis 600 Stich/cm² und mit Durchstichtiefen der Nadeln zwischen 4 bis 12 mm. Damit wird erreicht, dass mindestens 25 % der im Vliesstoff vorhandenen Faserlänge die vertikal zum Vliesstoffquerschnitt angeordneten Faserteile bilden. Diese übernehmen seitens des textilen Trägers bei der Funktion als Klebband die abfedernde, kraftaufnehmende Wirkung bei Druckbeanspruchungen im Sinne eines Schutzes des umklebten Kernes sowie entsprechende Lärmdämpfungen bei Bewegungen der Oberfläche zu dieser umgebende Teile.

Im 1. Ausführungsbeispiel besteht der erfindungsgemäße Träger für Klebbänder aus einem durch Vermaschen verfestigtes Faservlies. Dieser auch als Malivlies bezeichnete Vliesstoff besteht aus den Fasermaschen und den die Faserflauschseite bildenden, nicht in die Vermaschung einbezogenen Faserteile des Vlieses. Dieses Malivlies hat ein Flächengewicht von 150 g/m² und besteht zu 100 % aus Polyesterfasern der Feinheit 3,4 dtex. Die Verfestigungsparameter auf der Nähwirkmaschine sind Maschinenfeinheit 18 F und eine Stichlänge von 1,4 mm. Dieser Vliesstoff wurde auf einer Strukturierungsnadelmaschine mit folgenden Parametern vernadelt:
- Einstichseite:: Faserflauschseite
- Stichdichte:: 450 Stich/cm²
- Nadelart:: Kronennadel 15 x 18 x 38 S. 111
- Stichtiefe:: 7 mm

Dadurch erhält der Vliesstoff auf der durch die Fasermaschen gebildeten Oberfläche eine Faserschicht 5 aus vertikal angeordneten Faserteilen 3 mit einer Dichte von mindestens 2500 je cm² Vliesstoffoberfläche und einer Höhe von mindestens 1,8 mm.

Der in einem 2. Ausführungsbeispiel verwendete Vliesstoff entspricht der gleichen Konstruktion und den gleichen Verarbeitungsparametern wie im 1. Ausführungsbeispiel, nur ist hier die Einstichseite beim Velourisieren die Vliesstoffoberfläche mit den Fasermaschen.

Dadurch erhält der Vliesstoff auf der durch die Faserflauschseite gebildeten Oberfläche eine Faserschicht 5 aus vertikal angeordneten Faserteilen 3 mit einer Dichte von mindestens 2000 je cm² Vliesstoffoberfläche und einer Höhe von mindestens 2,1 mm.

Bei einem 3. Ausführungsbeispiel besteht der textile Träger für Klebbänder aus einem durch Übernähen mit Fäden verfestigtes Filament- oder Spinnvlies. Dieser auch als Maliwatt bezeichnete Vliesstoff besteht aus den horizontal angeordneten Filamenten des Vlieses und den Fadenmaschen. Als Parameter für diesen Vliesstoff gelten:
- Faserstoffart:: Polyesterfilamente 3,3 dtex
- Fadenart:: Polyester-Filamentgarn 150 dtex
- Vliesmasse:: 140 g/m²
- Stichlänge: 2,0 mm
- Legung:: Franse
- Maschinenfeinheit:: 22 F

Der Vliesstoff wurde auf einer Strukturierungsnadelmachine mit folgenden Parametern vernadelt:
- Stichdichte:: 480 Stich/cm²
- Nadelart:: Kronennadel 15 x 18 x 42 S 111
- Stichtiefe:: 8 mm

Dadurch erhält der Vliesstoff ohne Nähfadenzerstörung auf einer Oberfläche eine Faserschicht 5 aus vertikal angeordneten Filamentteilen 3 mit einer Dichte von mindestens 3200 je cm² Vliesstoffoberfläche und einer Höhe von mindestens 2,0 mm.

Gemäß einem 4. Ausführungsbeispiel wird ein Nadelvliesstoff als erfindungsgemäßer textiler Träger für Klebbänder verwendet. Dafür wurde ein Faservlies aus Polypropylenfasern der Feinheit 2,0 dtex und einem Gewicht von 180 g/m² durch vertikale Faserpfropfen mit folgenden Vernadelungsbedingungen zum Vliesstoff vorverfestigt:
- Nadelart:: 15 x 18 x 38 x 3C
- Stichdichte:: 200 Stich/cm²
- Stichtiefe:: 12 mm

Dieser Nadelvliesstoff wurde auf einer Stukturierungsnadelmaschine mit folgenden Parametern vernadelt:
- Nadelart:: Kronennadel 15 x 18 x 42 S 111
- Stichtiefe:: 10 mm
- Stichdichte:: 380 Stich/cm²

Dadurch erhält der Nadelvliesstoff auf einer Oberflächenseite eine Faserschicht 5 aus vertikal angeordneten Faserteilen 3 mit einer Dichte von mindestens 2800 je cm² Vliesstoffoberfläche und einer Höhe von mindestens 2,8 mm.

In einem 5. Ausführungsbeispiel wird der erfindungsgemäße textile Träger von einem durch Wasserstrahlen zum Wirbelvliesstoff verfestigten Faservlies gebildet. Das Faservlies besteht aus Polyesterfasern der Feinheit 1,6 dtex und hat ein Gewicht von 135 g/m².

Dieser Wirbelvliesstoff wurde auf einer Strukturierungsnadelmaschine mit folgenden Parametern vernadelt:
- Nadelart:: Kronennadel 15 x 18 x 42 S111
- Stichtiefe:: 7 mm
- Stichdichte:: 520 Stich/cm²

Dadurch erhält der Wirbelvliesstoff auf einer Oberflächenseite eine Faserschicht 5 aus vertikal angeordneten Faserteilen 3 mit einer Dichte von mindestens 4400 je cm² und einer Höhe von mindestens 1,8 mm.

Zum Zweck der flächigen Stabilisierung des Vliesstoffes kann bei der Verfestigung des Vlieses zum Vliesstoff im Vliesstoffquerschnitt 2 oder an einer der beiden Oberflächen des Vliesstoffes eine dünne textile oder nichttextile Bahn angeordnet und eingebunden werden. Auch das getrennte Zuführen einer solchen dünnen textilen oder nicht textilen Bahn bei der Vernadelung zur Ausbildung der Faserschicht 5 ist möglich. Dabei kann eine solche Bahn, angeordnet auf der für die Klebstoffbeschichtung vorgesehene Seite 1 gegenüberliegendem Oberfläche des Vliesstoffes die Funktion der Verminderung der Ausziehneigung der Faserteile 3 aus dem Vliesstoffquerschnitt 2 bewirken.

## Patentansprüche

1. Textiler Träger für Klebbänder, bestehend aus einem Vliesstoff mit einer Faserschicht auf einer Oberflächenseite, der auf der anderen Oberflächenseite mit Klebmittel beschichtet und zu schmalen Bändern geschnitten wird, **dadurch gekennzeichnet, daß** an der für die Klebstoffbeschichtung vorgesehenen Seite (1) gegenüberliegenden Oberfläche des Vliesstoffes vertikal zum Vliesstoffquerschnitt (2) abstehende Faserteile (3) als Faserschicht (5) angeordnet sind, die über die gesamte Fläche eine hohe Dichte, Parallelität und gleichmäßige Höhe aufweisen, wobei ein oder beide Enden (4) der Faserteile (3) im Vliesstoffquerschnitt (2) mechanisch eingebunden sind.

2. Textiler Träger für Klebbänder nach Anspruch 1, **dadurch gekennzeichnet, daß** auf einem cm² Vliesstoffoberfläche mindestens 2000 vertikal abstehende Faserteile (3) angeordnet sind.

3. Textiler Träger nach Anspruch 1 und 2, **dadurch gekennzeichnet, daß** die Höhe der vertikal abstehenden Faserteile (3) im Bereich zwischen 1 bis 6 mm liegen kann.

4. Textiler Träger nach Anspruch 1 bis 3, **dadurch gekennzeichnet, daß** der Vliesstoff aus einem Filamentvlies besteht.

5. Textiler Träger nach Anspruch 1 bis 4, **dadurch gekennzeichnet, daß** der Vliesstoff bis 25 Masseprozent thermoplastischer Bindefasern enthält.

6. Textiler Träger nach Anspruch 1 bis 5, **dadurch gekennzeichnet, daß** im Vliesstoffquerschnitt (2) eine zusätzliche textile oder nichttextile Bahn angeordnet ist.

7. Textiler Träger nach Anspruch 1 bis 6, **dadurch gekennzeichnet, daß** auf einer oder beiden Seiten des Vliesstoffes eine zusätzliche textile oder nichttextile Bahn angeordnet ist.
